# EUROPÄISCHE PATENTSCHRIFT

(11) **EP 4 314 567 B1**
(45) Veröffentlichungstag und Bekanntmachung des Hinweises auf die Patenterteilung: **11.03.2026**
(21) Anmeldenummer: 22718682.2
(22) Anmeldetag: 28.03.2022
(51) Int. Cl.: F04D 25/08, F04D 29/30, F04D 29/42, F04D 29/44, H02K 9/06, F04D 29/58

(54) **ELEKTROMOTOR MIT EINER KÜHLANORDNUNG**
ELECTRIC MOTOR WITH COOLING ARRANGEMENT
MOTEUR ÉLECTRIQUE POURVU D'UN SYSTÈME DE REFROIDISSEMENT

(30) Priorität: 01.04.2021 DE 102021108359
(43) Veröffentlichungstag der Anmeldung: 07.02.2024
(73) Patentinhaber: KSB SE & Co. KGaA, 67227 Frankenthal (DE)
(72) Erfinder: FRITZ, Jochen, 67227 Frankenthal (DE); JAEGER, Christoph, 67227 Frankenthal (DE); KLEMM, Toni, 67227 Frankenthal (DE); MOHR, Matthias, 67227 Frankenthal (DE)
(86) Internationale Anmeldenummer: PCT/EP2022/058086
(87) Internationale Veröffentlichungsnummer: WO 2022/207545

(56) Entgegenhaltungen:
- DE-A1- 102011 109 535
- JP-A- H11 275 812
- JP-A- S58 195 098
- US-A1- 2018 177 373
- US-A1- 2019 186 500
- US-A1- 2021 006 128

## Beschreibung

Die Erfindung betrifft einen Elektromotor zum Antrieb einer Kreiselpumpe mit einer Kühlanordnung, die ein Lüfterrad und eine Haube umfasst, wobei die Haube einen Raum um das Lüfterrad umschließt.

Eine Kreiselpumpenanordnung umfasst in der Regel eine oder mehrere Kreiselpumpen, einen oder mehrere Elektromotoren und leistungselektronische Geräte zur Drehzahlregelung durch Frequenzumrichtung. Dabei benötigen gerade die Elektromotoren und die dazugehörige Motorelektronik während des Betriebs ausreichende Kühlung.

Derartige typische Elektromotoren sind allgemein bekannt und werden hauptsächlich in Großserie hergestellt. Ein Elektromotor besteht dabei aus einem drehfest mit der Motorwelle verbundenen Rotor, einem Stator mit bewickeltem Statorpaket, einem Statorgehäuse mit auf der Außenseite befindlichen Kühlrippen, beidseitigen Lagerschilden mit Wälz- oder Gleitlagern und einem auf dem der Antriebsseite gegenüberliegenden Wellenende drehfest mit der Welle verbundenen Lüfterrad, das von einer fest mit dem Statorgehäuse verbundenen Lüfterhaube umschlossen ist.

Häufig ist an dem Statorgehäuse ein Kasten angeordnet, das sogenannte Elektronikgehäuse, in dem die Bestandteile der Motorelektronik verbaut sind. In der Regel umfasst die Motorelektronik einen Frequenzumrichter und eine Leistungssteuerung und/oder eine Drehzahlregelung. Oft werden solche Elektronikgehäuse auf einem Sockel angeordnet, damit die Abwärme des Elektromotors die Motorelektronik nicht beeinflusst und der vom Motorlüfter erzeugte Kühlluftstrom auch für die Kühlung der Motorelektronik genutzt werden kann.

Die Lüfterhaube leitet einerseits die radial aus dem Lüfterrad austretende Kühlluft in axiale Richtung zu den Kühlrippen des Statorgehäuses und verhindert andererseits durch ein auf der Anströmseite des Lüfterrades angeordnetes Gitter das Eindringen von Fremdkörpern.

Die DE 10 2008 051 650 A1 offenbart eine Erfindung mit gemeinsamer Kühlung des Motors und der Motorelektronik, bei der der Luftstrom durch das Einlassgitter der Lüfterhaube angesaugt wird, bevor das Lüfterrad den Luftstrom zur Kühlung des Motors und des Elektronikgehäuses antreibt. Hier liegt der Fokus auf der Kühlung einer sehr großen Motorelektronik, die sowohl axial als auch radial um den Motor aufbaut.

Die US 2021/006128 A1 offenbart einen Motorlüfter mit einer Schutzvorrichtung zur Lenkung von Kühlluft.

Die US 2019/186500 A1 zeigt eine Baugruppe, bestehend aus einem Gehäuse, einem Motor und einem Kühlgebläse, wobei eine Abdeckung eine hintere Oberfläche und eine Peripherie aufweist und die Peripherie mindestens einen Einlass für Luft definiert, die durch den Betrieb des Kühlgebläses radial in die Abdeckung gezogen wird.

Die DE 10 2011 109 535 A1 beschreibt eine Lüfteranordnung mit einem Gehäuse und einem Luftleitmittel, wobei das Luftleitmittel lösbar mit dem Gehäuse verbunden ist.

Die JP H11 275812 A offenbart eine Kühlrippenstruktur eines Motors, wobei die Kühlrippen auf dem Motor angeordnet sind.

Üblicherweise werden in Großserie hergestellte Elektromotoren mit drehrichtungsunabhängigen Lüfterrädern ausgestattet. Dadurch können die Motoren inklusive deren Lüfter für Rechts- und Linkslauf eingesetzt werden. Die Schaufeln des Lüfterrades sind rein radial ausgerichtet, um eine drehrichtungsunabhängige Kühlleistung zu erzielen. Das bedingt eine stark stoßbehaftete Zu- und Abströmung der Kühlluft. Dieser Stoßzustand führt zu Wirbelbildungen und zu Strömungsablösungen der Kühlluft, wodurch die Wirksamkeit und der Wirkungsgrad der Kühlung vermindert werden. Weiterhin verursachen die Verwirbelungen der Kühlluft eine Geräuschentwicklung, die sich auf in der Umgebung befindliche Personen störend auswirkt oder bei größerer Intensität auch gesundheitsschädlich sein kann.

Darüber hinaus kann bei Elektromotoren, die mit kleiner Drehzahl betrieben werden, der Kühlluftstrom nicht mehr ausreichen, um gleichzeitig die Abwärme des Stators und der Motorelektronik abzuführen.

Gerade die Abdeckungen bzw. Lüfterhauben des Lüfterrades sind hinsichtlich der Strömungsführung des Kühlluftstroms wenig optimiert. Neben einer einfachen Umleitung des Kühlluftstromes übernehmen sie hauptsächlich den Schutz vor unbeabsichtigtem Eingreifen in die sich drehenden Teile der Lüftungsanordnung. Somit trägt die Gestaltung der Lüfterhaube nicht unerheblich zur Geräuschentwicklung bei.

Aufgabe der Erfindung ist es, einen Elektromotor mit einer Kühlvorrichtung so zu gestalten, dass auch bei niedriger Drehzahl eine ausreichende Kühlleistung erzielt werden kann. Dabei sollte der Elektromotor und die Kühlvorrichtung mit einer möglichst geringen Geräuschentwicklung betrieben werden können. Weiterhin sollte die Kühlvorrichtung einen Schutz vor unbeabsichtigtem Zugriff gewähren. Der Austausch von Ersatzteilen sollte durch die Konstruktion des Elektromotors mit einer Kühlvorrichtung begünstigt sein. Die Vorrichtung sollte einfach und kostengünstig herstellbar sein.

Diese Aufgabe wird erfindungsgemäß durch einen Elektromotor mit einer Kühlanordnung gemäß Anspruch 1 gelöst. Bevorzugte Varianten sind den Unteransprüchen zu entnehmen.

Erfindungsgemäß sind an einem Elektromotor zum Antrieb einer Kreiselpumpe mit einer Kühlanordnung, die ein Lüfterrad und eine Haube umfasst, in dem von der Haube umschlossenen Raum Führungselemente angeordnet.

Idealerweise sind die Führungselemente schaufelartig ausgebildet und weisen eine radiale Eintrittskante und eine axiale Austrittskante auf. Sie sind stationär in der Haube des Lüfters angeordnet. Ihre Aufgabe ist, eine möglichst verlustarme Umlenkung der aus dem Lüfterrad austretenden Drallströmung in eine möglichst drallfreie Strömung zur Kühlung des Elektromotors und der Motorelektronik zu realisieren. Vorteilhafterweise ist die Kühlung auf diese Weise auch bei niedriger Drehzahl des Elektromotors sehr wirksam, da die Luftströmung gerichtet an den Ort der Wärmeabfuhr erfolgt.

Die schaufelartigen Führungselemente sind vergleichbar den Leitschaufeln von Leiträdern gestaltet, die vornehmlich in mehrstufigen Pumpen den Kreiselradlaufrädern nachgeschaltet sind. Sie umgeben das Lüfterrad in einem radialen Raum um das Lüfterrad. Dabei trifft die Kühlluftströmung auf eine radiale Eintrittskante der schaufelartigen Führungselemente. Durch ihre Krümmung entgegen der Drehrichtung des Lüfterrades und der abgerundeten Lüfterhaube erfolgt die Umlenkung des radialen ausgerichteten Kühlluftstroms in die axiale Ausrichtung des Kühlluftstroms ohne Strömungsablösung und Wirbelbildung. Der besonders wirkungsvoll sowie nahezu verlustfrei umgelenkte Kühlluftstrom verlässt die schaufelartigen Führungselemente, indem er an der axialen Austrittskante der schaufelartigen Führungselemente in den ringförmigen Kanal zur Kühlung des Statorgehäuses eintritt.

Gemäß der Erfindung erstrecken sich die Führungselemente von der Innenwand der Haube radial in Richtung der zentral angeordneten Rotorwelle. Dabei weisen die Führungselemente erfindungsgemäß mit zunehmender Erstreckung einen zunehmenden Krümmungsradius entgegen der Drehrichtung des Lüfterrades auf. Dadurch lässt sich vorzugsweise eine Strömungsumlenkung erzielen, die ohne Stoßzustände, Strömungsablösungen und Wirbelbildungen auskommt. Idealerweise wird hiermit die Kühlleistung der Kühlanordnung intensiviert. Gleichzeitig wird die Geräuschentwicklung im Betriebszustand im Vergleich zu Kühlanordnungen, die drehrichtungsunabhängig ausgebildet sind, deutlich reduziert.

Die Haube der Kühlanordnung ist erfindungsgemäß mit den Führungselementen einstückig ausgebildet. Dadurch lässt sich die Haube ökonomisch beispielsweise als Kunststoffspritzteil herstellen. In einer alternativen Variante der Erfindung ist auch eine Haube auf metallischer Basis denkbar.

Das Elektronikgehäuse sitzt auf dem Statorgehäuse des Elektromotors auf und ist um die Höhe der Elemente zur Wärmeabfuhr, insbesondere der Kühlrippen, beabstandet. Dabei weist das Elektronikgehäuse eine Form auf, die einen Kanal zur Wärmeabfuhr zwischen Statorgehäuse und Elektronikgehäuse bildet. Vorteilhafterweise weist die Haube eine Anformung mit verlängert ausgebildeten Führungselementen auf, die eine Kühlluftströmung effizient in diesen Kühlkanal lenkt und somit die Abwärme des Elektromotors und der Motorelektronik besonders wirksam abführen kann.

Gemäß der Erfindung umschließt ein Raum, der durch die Haube mit Führungselementen gebildet wird, das Lüfterrad der Kühlanordnung vollständig radial. Diese konstruktive Lösung ist besonders ideal zur gerichteten Umlenkung der Kühlströmung, um Strömungsablösungen und Wirbelbildungen zu vermeiden. Der Betrieb der Kühlanordnung ist dadurch besonders geräuscharm möglich.

Für eine effiziente Kühlung mit voller Kühlleistung ist eine gerichtete Kühlluftströmung enorm wichtig. Idealerweise bildet die Haube zwischen der Wandinnenfläche des zylindrischen Teils der Haube und einer Wandaußenfläche eines Gehäuses des Elektromotors, insbesondere des Statorgehäuses mit angeformten Kühlrippen, einen ringförmigen Kanal aus. Zunächst wird die vom Lüfterrad angesaugte und erzeugte Kühlluftströmung von den Führungselementen der Haube sowie der Form der Haube selbst von einer radialen in eine axiale Richtung umgelenkt. Durch die erfindungsgemäße Gestaltung der schaufelartigen Führungselemente erfolgt die Umlenkung ohne Verwirbelungen, Strömungsablösungen und ohne beeinträchtigende Schallemission. Vorteilhafterweise schließt der zylindrische Teil der Haube so am Statorgehäuse an, dass ein ringförmiger Kanal gebildet wird, in den die Kühlluftströmung injiziert wird. Dadurch wird die Kühlleistung der Kühlanordnung besonders leistungsstark, insbesondere auch bei geringer Drehzahl des Elektromotors.

In einer besonders vorteilhaften Ausgestaltung der Erfindung weist die Haube eine Rundung auf, die die verwirbelungsfreie Umlenkung der Kühlluftströmung begünstigt. Dieser abgerundete Übergang ist zwischen dem axial angeordneten Ansauggitter zum zylinderförmigen Teil der Haube, die radial an das Statorgehäuse anschließt, angeordnet. Der abgerundete Übergang beeinflusst ebenfalls die Form der Führungselemente, die sich aufgrund ihrer einstückigen Ausbildung mit der Haube nahtlos an die Innenwand der Haube und deren abgerundete Form anschließen. Dadurch kann die Kühlluftströmung ohne Strömungsablösung und ohne beeinträchtigende Geräuschentwicklung auf die axiale Überströmung des Statorgehäuses sowie des Kanals zur Kühlung zwischen Statorgehäuse und Elektronikgehäuse umgelenkt werden. Da der Kühlluftstrom nicht nur gleichmäßig auf die Kühlrippen des Motors gelenkt werden soll, sondern ebenfalls den Elektronikgehäuse für die Leistungselektronik kühlen soll, ist im Bereich des Elektronikgehäuses eine asymmetrische Verteilung des Kühlluftstromes erforderlich. Daher weist die Lüfterhaube in dieser Ausgestaltung eine asymmetrische von der Kreisform abweichende Anformung auf, die einen in diesem Bereich vergrößerten Luftstrom ermöglicht.

Das Lüfterrad sitzt auf der Rotorwelle des Elektromotors direkt nach dem Lagerschild außerhalb des Statorgehäuses auf der pumpenabgewandten Seite. Somit treibt die Rotorwelle das Lüfterrad mit der jeweiligen Drehzahl des Elektromotors an. Die Kühlanordnung ist minimal zum Elektromotor beabstandet, um die Aufstellmaße durch zu wuchtige Aufbauten nicht unvorteilhaft einzuschränken.

Erfindungsgemäß weist das Lüfterrad in Drehrichtung rückwärts gekrümmte Schaufeln auf. Die Tragscheibe des Lüfterrades weist einen zur Ansaugseite der Kühlluftströmung ausgebildeten Nabenvorsprung auf, an dem die Schaufeln aus der Mitte versetzt angreifen. Die Schaufeln stehen von der Tragscheibe in saugseitiger Richtung hervor und weisen vorzugsweise einen entgegen der Drehrichtung gekrümmten Verlauf auf. Dabei können insbesondere alle Schaufeln die gleiche Krümmung aufweisen.

Bei einer besonders günstigen Ausführung der Erfindung ist das Lüfterrad mit den Schaufeln einstückig ausgebildet. Dabei erweist es sich als vorteilhaft, wenn das Laufrad und/oder die Schaufeln aus einem metallischen Werkstoff oder einem Kunststoffspritzguss gefertigt sind.

Idealerweise ist die Tragscheibe des Lüfterrades in Form eines Trompetentrichters ausgebildet, wobei sich die Tragscheibe in Ansaugrichtung, insbesondere in Richtung des Ansauggitters, zuspitzt. Ein Schnitt durch diesen Trompetentrichter ergibt eine Aneinanderreihung von einem oder mehreren Kreisbögen und Geraden. Dieser Kurvenzug kann durch die mathematische Form einer Hyperbel nachgebildet werden. Diese besondere Konstruktion der Tragscheibe lenkt die Kühlluftströmung besonders sanft um und vermeidet somit eine Strömungsablösung, die wiederum eine Wirbelbildung und eine Schallemission hervorrufen würde.

Die strömungsoptimierte Erzeugung des Kühlluftstroms mit dem Lüfterrad wird insbesondere durch die Schaufelanordnung erzielt. Dabei sind die Schaufeln des Lüfterrades radial gekrümmt entgegen der Drehrichtung. Sie setzen auf der Trompetentrichterform außerhalb des Mittelpunkts und somit mit einer aus der Mitte versetzten Anordnung auf der Tragscheibe an. Der Ansatzpunkt entspringt einem gedachten Ring auf dem Trompetentrichter der Tragscheibe, der etwa einem Drittel des Durchmessers der Tragscheibe entspricht.

Der Verlauf der Schaufelmittellinie zwischen dem Schaufelein- und -austritt wird als Skelettlinie bezeichnet. Sie wird oft durch einen Kreisbogen, aber auch durch Parabelbogen, S-Schlag und andere analytische Kurven beschrieben.

Die erfindungsgemäßen Schaufeln des Lüfterrades weisen an ihrem Ansatzpunkt auf der Tragscheibe eine Rundung auf. Die Skelettlinie der Schaufeln erstreckt sich ausgehend von einer Rundung und endet gerade am äußeren Rand der Tragscheibe. Die vorteilhafte Konstruktion ist Teil der strömungsoptimierten Ausgestaltung des Lüfterrades, die eine durch die Kühlanordnung erzeugte Kühlluftströmung ohne Strömungsablösung und Wirbelbildung ermöglicht. Die Abwärme des Elektromotors und der Motorelektronik lässt sich hierdurch besonders wirksam ohne beeinträchtigende Geräuschentwicklung abführen.

In einer besonders vorteilhaften Variante der Erfindung sind die Schaufeln des Lüfterrades in Umfangsrichtung schräg angeordnet sind. Dadurch lässt sich der Kühlluftstrom besonders geräuscharm erzeugen. Der Winkel der Schrägstellung zur Rotorwelle des Elektromotors beträgt vorzugsweise mehr als 5 °, insbesondere mehr als 10 °, bevorzugt mehr als 15 °, und/oder vorzugsweise weniger als 45 °, insbesondere weniger als 40 °, bevorzugt weniger als 35 °. Da das Lüfterrad vorzugsweise als einfach ausformbares Spritzgussteil gefertigt werden soll, ist die Schaufelfläche als Schraubenfläche ausgeführt, die dadurch entsteht, dass die Skelettlinie der Schaufel mit einer geeigneten Steigung um die Drehachse des Lüfterrades verzogen wird.

Die Konstruktion der Kühlanordnung, insbesondere der Haube und des Lüfterrades zeichnet sich durch eine besonders wartungsfreundliche Gestaltung aus. Dabei sind die Teile besonders leicht zu demontieren und ermöglichen dadurch eine zeitreduzierte Wartung.

Weitere Merkmale und Vorteile der Erfindung ergeben sich aus der Beschreibung von Ausführungsbeispielen anhand der Zeichnungen und aus den Zeichnungen selbst.

Dabei zeigt:
- Fig. 1: einen Schnitt eines Elektromotors mit einer Kühlanordnung zum Antrieb einer Kreiselpumpe,
- Fig. 2: eine Frontansicht des Elektromotors,
- Fig. 3: eine perspektivische Ansicht des Elektromotors mit Kühlanordnung und abgezogener Haube,
- Fig. 4: einen Schnitt der Kühlanordnung,
- Fig. 5: eine perspektivische Ansicht eines erfindungsgemäßen Lüfterrades.

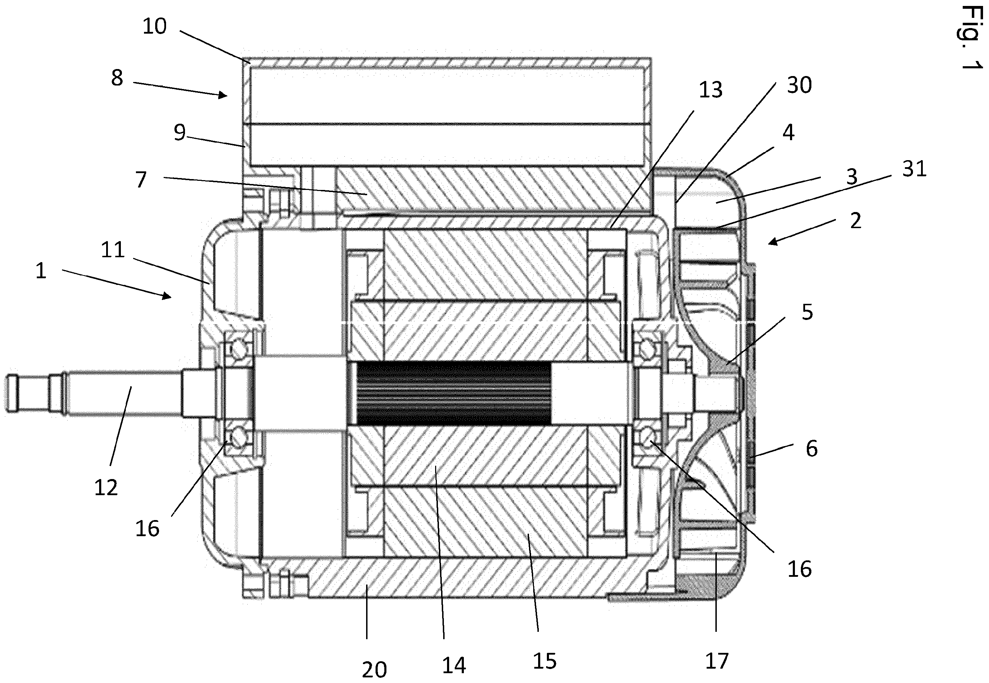

In Fig. 1 ist ein Schnitt eines Elektromotors 1 dargestellt, der zum Antrieb einer Kreiselpumpe vorgesehen ist. Die Rotorwelle 12 wird von einem pumpenseitigen Lagerschild 11 und einem mit dem Statorgehäuse 13 einstückig ausgebildeten Lagerschild durch die integrierten Wälzlager 16 gestützt und drehbar gelagert. Die Rotorwelle 12 weist einen Rotor 14 auf. Entsprechend des elektromotorischen Prinzips treibt das umlaufende Magnetfeld des Stators 15 den Rotor 14 an.

Das Elektronikgehäuse 8 sitzt auf dem Statorgehäuse 13 auf und wird aus dem Elektronikgehäuseunterteil 9 sowie dem Elektronikgehäusedeckel 10 gebildet. Im Elektronikgehäuse 8 ist die Motorelektronik bestehend aus Frequenzumrichter, Leistungssteuerung und/oder Drehzahlregelung angeordnet. Im Elektronikgehäuseunterteil 9 sind Elemente zur Wärmeabfuhr 7 positioniert. In diesem Ausführungsbeispiel sind die Elemente zur Wärmeabfuhr 7 als Kühlrippen ausgebildet. Die Wärme des Elektromotors 1 wird über das Statorgehäuse 13 und die Wärme der Motorelektronik wird über das Elektronikgehäuseunterteil 9 gleichzeitig den Elementen zur Wärmeabfuhr 7 zugeführt.

Auf der pumpenabgewandten Seite des Elektromotors 1 ist die Kühlanordnung 2 angebracht. Diese besteht aus dem Lüfterrad 5, der Haube 4 mit integrierten Öffnungen 6. Dabei umschließt die Haube 4 einen radialen Raum 17 um das Lüfterrad 5, wobei in diesem Raum 17 Führungselemente 3 angeordnet sind. Die schaufelartigen Führungselemente 3 weisen eine radiale Eintrittskante 31 und eine axiale Austrittskante 30 auf. Das Lüfterrad 5 saugt einen Luftstrom axial durch die Öffnungen 6 der Haube 4 an und lenkt diesen radial um in den Raum 17. Die Führungselemente 3, die gemäß der Erfindung schaufelartig und einstückig mit der Haube 4 ausgebildet sind, lenken durch ihre dem Lüfterrad 5 radial entgegengesetzte Krümmung den Luftstrom axial um, so dass er die Elemente der Wärmeableitung 7 und 20 überstreicht, die radial über das ganze Statorgehäuse 13 angeordnet sind, zur effizienten Kühlung des Motors und der Motorelektronik.

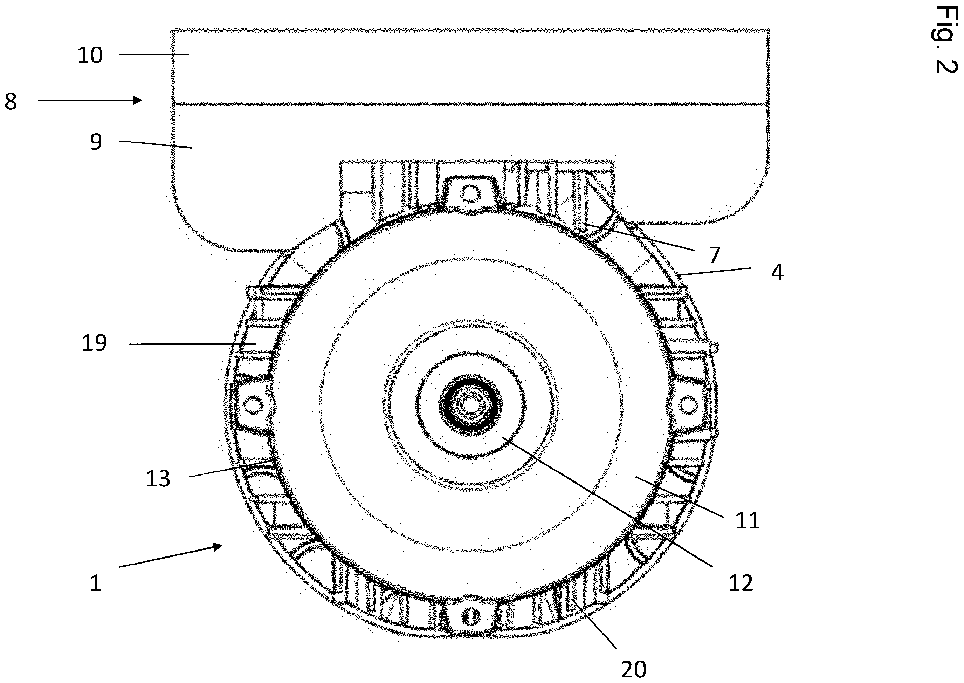

Die Fig. 2 zeigt eine Seitenansicht des Elektromotors 1 aus der Perspektive, aus der der Anschluss an die Kreiselpumpe erfolgt. Der Elektronikgehäuse 8 sitzt auf dem Statorgehäuse 13 auf. Das Elektronikgehäuse umfasst dabei das Elektronikgehäuseunterteil 9 sowie dem Elektronikgehäusedeckel 10. Am Elektronikgehäuseunterteil 9 sind Elemente zur Wärmeabfuhr 7 und am Statorgehäuse 13 sind die Elemente zur Wärmeabfuhr 20 angebracht. In diesem Ausführungsbeispiel sind beide Elemente zur Wärmeabfuhr 7 und 20 als Kühlrippen ausgebildet. Die Haube 4 überragt das Statorgehäuse 13 mit den Elementen zur Wärmeabfuhr 7 und 20 in der Art, dass ein ringförmiger Kanal 19 gebildet wird, der die Elemente zur Wärmeabfuhr 7 und 20 gerade umschließt. Vorteilhafterweise kann der Kühlluftstrom somit ideal in die Kanäle, die durch die Elemente der Wärmeabfuhr 7 und 20 mit dem Statorgehäuse 13 gebildet werden, eingeleitet werden und diese zur Kühlung durchströmen.

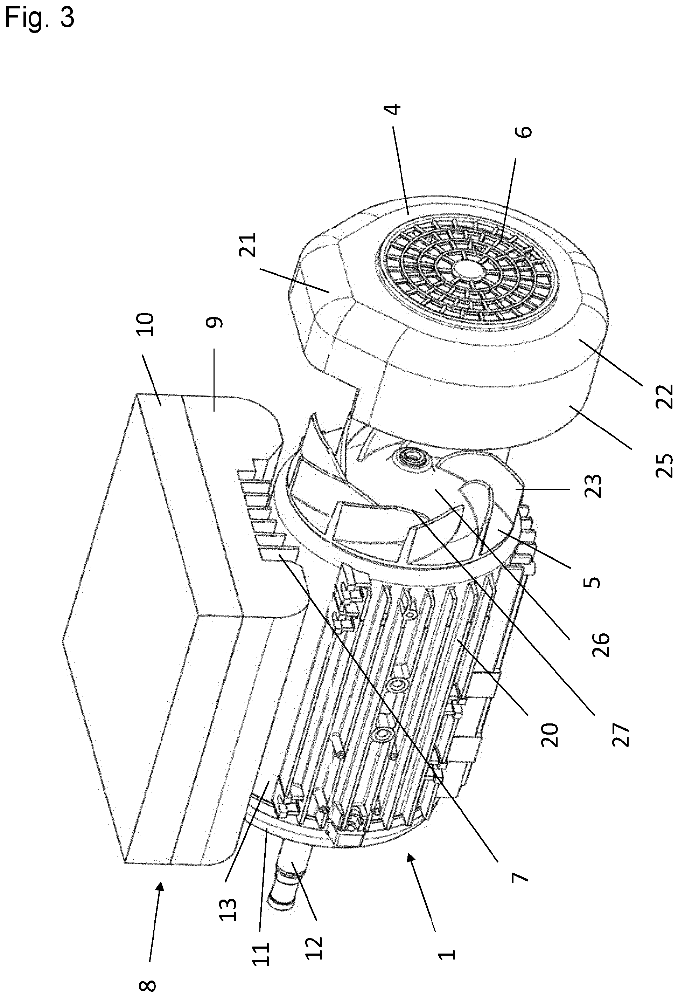

Die Fig. 3 zeigt einen Elektromotor 1 mit der Kühlanordnung 2, bei der die Haube 4 abgezogen dargestellt ist. Die Haube 4 weist Öffnungen des Ansauggitters 6 auf, die in diesem Ausführungsbeispiel in Form eines Gitters innerhalb der Haube 4 ausgebildet sind. Darüber hinaus weist die Haube 4 eine asymmetrische Anformung 21 auf, die einen ausreichend großen Kühlluftstrom in den Kanal leiten soll, der durch die Elemente der Wärmeabfuhr 7, dem Statorgehäuse 13 und dem Elektronikgehäuseunterteil 9 gebildet wird. Vorteilhafterweise kann dadurch die Wärmeentwicklung des Elektromotors 1 und die Wärmeentwicklung der Motorelektronik, die im Elektronikgehäuse 8 angeordnet ist, abgeführt werden. Die Haube 4 weist einen abgerundeten Übergang 22 von den Öffnungen 6 zu dem zylinderförmigen Teil 25 auf. Dadurch wird auf ganz vorteilhafte Weise der radiale Kühlluftstrom axial umgelenkt, so dass er die Kanäle, die aus den Elementen der Wärmeabfuhr 20 und dem Statorgehäuse 13 gebildet werden, durchströmt. Dieser Kühlluftstrom wird durch das Lüfterrad 5 erzeugt, das in Drehrichtung rückwärts gekrümmte Schaufeln 23 aufweist, die auf der trichterförmigen Tragscheibe 26 angeordnet sind. Dabei weisen die Schaufeln 23 an ihrem Ansatzpunkt eine Rundung 27 auf ihrer Skelettlinie auf.

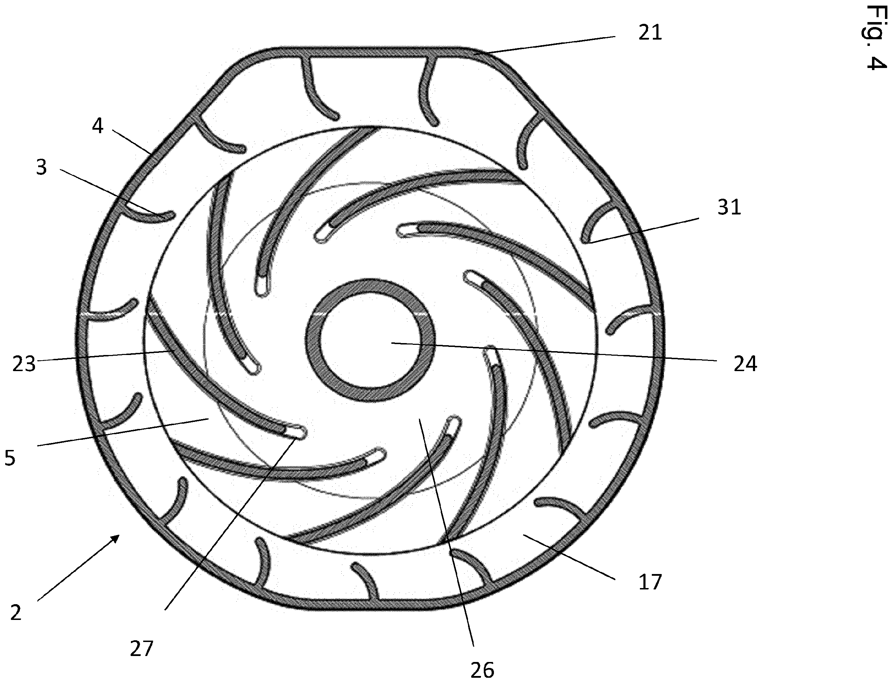

Die Fig. 4 zeigt einen Schnitt der Kühlanordnung 2. Im Inneren der Kühlanordnung 2 ist das Lüfterrad 5 mit den in Drehrichtung rückwärts gekrümmten Schaufeln 23 anhand der Öffnung 24 auf der nicht dargestellten Rotorwelle 12 positioniert. Das Lüfterrad 5 weist dabei eine trompetentrichterförmige Tragscheibe 26 auf, die sich in Richtung der Draufsicht zur Öffnung 24 zuspitzt. Die Schaufeln 23 entspringen der Tragscheibe 26 mit einer Rundung 27. Der Ansatzpunkt der Schaufeln 23 liegt auf einer gedachten Linie, die etwa ein Drittel des Durchmessers des Lüfterrades 5 entspricht. Der Ansatzpunkt der Schaufeln 23 liegt somit außerhalb der Mitte, die durch die Öffnung 24 markiert wird. Die Haube 4 umschließt den Raum 17, der das Lüfterrad 5 radial vollständig umgibt. In diesem Raum 17 sind die Führungselemente 3 angeordnet und einstückig mit der Haube 4 ausgebildet. Die Führungselemente 3 weisen eine radiale Krümmung entgegen der Lüfterradkrümmung und eine radiale Eintrittskante 31 auf. Des Weiteren weist die Haube 4 eine asymmetrische Anformung 21 auf, in der auch die Führungselemente 3 verlängert an die asymmetrische Form angepasst sind.

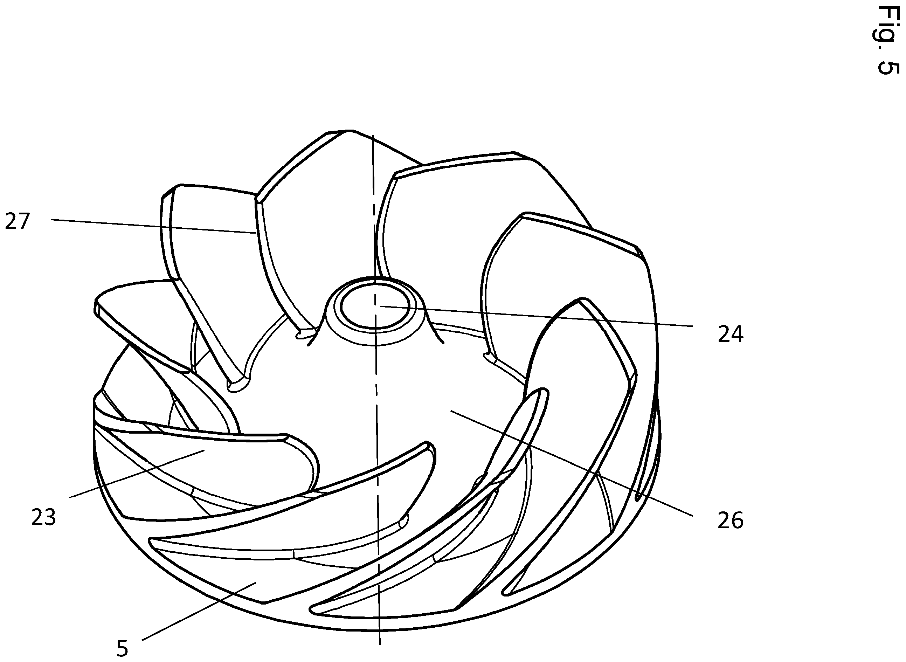

Die Fig. 5 zeigt eine perspektivische Ansicht des Lüfterrades 5, das eine trompetentrichterförmige Tragscheibe 26 mit Zuspitzung zur Öffnung 24 aufweist. Die Schaufeln 23 sind in Drehrichtung rückwärts gekrümmt und zusätzlich in Umfangsrichtung schräg ausgerichtet. Dabei beträgt der Winkel der Schrägstellung zur nicht dargestellten Rotorwelle 12, die durch die Öffnung 24 zur Positionierung des Lüfterrades 5 ragt, mehr als 5 °, vorzugsweise mehr als 10 °, insbesondere mehr als 15 °, und/oder von weniger als 45 °, vorzugsweise weniger als 40 °, insbesondere weniger als 35 °. Die Schaufeln 23 weisen eine Rundung 27 an ihrem Ansatzpunkt auf der Tragscheibe 26 auf. Vorteilhafterweise lässt sich der Kühlluftstrom dadurch auf besonders geräuscharme Weise erzeugen

## Patentansprüche

1. Elektromotor (1) zum Antrieb einer Kreiselpumpe mit einer Kühlanordnung (2), die ein Lüfterrad (5) und eine Haube (4) umfasst, wobei die Haube (4) einen Raum (17) um das Lüfterrad (5) umschließt, wobei in dem Raum (17) Führungselemente (3) angeordnet sind, wobei die Führungselemente (3) einstückig mit der Haube (4) ausgebildet sind, wobei sich die Führungselemente (3) von der Haube (4) radial in Richtung Rotorwelle (13) erstrecken**, dadurch gekennzeichnet, dass** die Führungselemente (3) mit zunehmender Erstreckung einen zunehmenden Krümmungsradius entgegen der Drehrichtung des Lüfterrades (5) aufweisen.

2. Elektromotor nach Anspruch 1, **dadurch gekennzeichnet, dass** die Führungselemente (3) eine radiale Eintrittskante (31) und eine axiale Austrittskante (30) aufweisen.

3. Elektromotor nach Anspruch 1 oder 2, **dadurch gekennzeichnet, dass** die Haube (4) eine Anformung (21) zur Bildung eines Kanals zu Elementen der Wärmeabfuhr (7) eines Elektronikgehäuses (8) aufweist.

4. Elektromotor nach einem der Ansprüche 1 bis 3, **dadurch gekennzeichnet, dass** der Raum (17) das Lüfterrad (5) vollständig radial umschließt.

5. Elektromotor nach einem der Ansprüche 1 bis 4, **dadurch gekennzeichnet, dass** zwischen einer Wandinnenfläche der Haube (4) und einer Wandaußenfläche eines Gehäuses des Elektromotors (1) ein ringförmiger Kanal (19) gebildet wird.

6. Elektromotor nach einem der Ansprüche 1 bis 5, **dadurch gekennzeichnet, dass** die Haube (4) einen abgerundeten Übergang (22) von einem Ansauggitter (6) zu einem zylinderförmigen Teil (25) aufweist.

7. Elektromotor nach einem der Ansprüche 1 bis 6, **dadurch gekennzeichnet, dass** das Lüfterrad (5) in Drehrichtung rückwärts gekrümmte Schaufeln (23) aufweist.

8. Elektromotor nach Anspruch 7, **dadurch gekennzeichnet, dass** alle Schaufeln (23) des Lüfterrades (5) die gleiche Krümmung aufweisen.

9. Elektromotor nach einem der Ansprüche 1 bis 8, **dadurch gekennzeichnet, dass** eine Tragscheibe (26) des Lüfterrades (5) in Form eines Trompetentrichters ausgebildet ist, wobei sich die Tragscheibe (26) in Richtung einer Öffnung (24) zuspitzt.

10. Elektromotor nach Anspruch 9, **dadurch gekennzeichnet, dass** die Schaufeln (23) des Lüfterrades (5) außerhalb des Mittelpunkts der Tragscheibe (26) auf einem Ring der Trichterform ansetzen.

11. Elektromotor nach Anspruch 10, **dadurch gekennzeichnet, dass** die Schaufeln (23) an ihrem Ansatzpunkt auf der Tragscheibe (26) eine Rundung (27) aufweisen.

12. Elektromotor nach einem der Ansprüche 7 bis 11, **dadurch gekennzeichnet, dass**
die Schaufeln (23) des Lüfterrades (5) in Umfangsrichtung schräg angeordnet sind, wobei der Winkel der Schrägstellung zur Rotorwelle (12) vorzugsweise mehr als 5 °, insbesondere mehr als 10 °, bevorzugt mehr als 15 °, und/oder vorzugsweise weniger als 45 °, insbesondere weniger als 40 °, bevorzugt weniger als 35 °, beträgt.

## Claims

1. Electric motor (1) for driving a centrifugal pump, having a cooling arrangement (2) which comprises a fan impeller (5) and a shroud (4), the shroud (4) enclosing a space (17) around the fan impeller (5), guide elements (3) being arranged in the space (17), the guide elements (3) being formed as a single piece with the shroud (4), the guide elements (3) extending radially from the shroud (4) in the direction of a rotor shaft (13), **characterized in that** the guide elements (3) have, with increasing extent, an increasing radius of curvature counter to the direction of rotation of the fan impeller (5).

2. Electric motor according to Claim 1, **characterized in that** the guide elements (3) have a radial leading edge (31) and an axial trailing edge (30).

3. Electric motor according to Claim 1 or 2, **characterized in that** the shroud (4) has a protuberance (21) for forming a channel to heat dissipation elements (7) of an electronics housing (8).

4. Electric motor according to any one of Claims 1 to 3, **characterized in that** the space (17) radially fully encloses the fan impeller (5).

5. Electric motor according to any one of Claims 1 to 4, **characterized in that** an annular channel (19) is formed between an inner wall surface of the shroud (4) and an outer wall surface of a housing of the electric motor (1).

6. Electric motor according to any one of Claims 1 to 5, **characterized in that** the shroud (4) has a rounded transition (22) from an intake grille (6) to a cylindrical part (25).

7. Electric motor according to any one of Claims 1 to 6, **characterized in that** the fan impeller (5) has blades (23) that are curved backwards in a direction of rotation.

8. Electric motor according to Claim 7, **characterized in that** all of the blades (23) of the fan impeller (5) have the same curvature.

9. Electric motor according to any one of Claims 1 to 8, **characterized in that** a carrying disc (26) of the fan impeller (5) is configured in the shape of a trumpet bell, the carrying disc (26) tapering in the direction of an opening (24).

10. Electric motor according to Claim 9, **characterized in that** the blades (23) of the fan impeller (5) are attached, outside the central point of the carrying disc (26), to a ring of the bell shape.

11. Electric motor according to Claim 10, **characterized in that** the blades (23) have a rounded portion (27) at their point of attachment on the carrying disc (26).

12. Electric motor according to any one of Claims 7 to 11, **characterized in that** the blades (23) of the fan impeller (5) are arranged so as to be oblique in a circumferential direction, the angle of the obliquity with respect to the rotor shaft (12) being preferably more than 5°, in particular more than 10°, preferably more than 15°, and/or preferably less than 45°, in particular less than 40°, preferably less than 35°.

## Revendications

1. Moteur électrique (1) destiné à entraîner une pompe centrifuge avec un ensemble de refroidissement (2), qui comprend une hélice de ventilateur (5) et un capot (4), le capot (4) renfermant un espace (17) autour de l'hélice de ventilateur (5), des éléments de guidage (3) étant disposés dans l'espace (17), les éléments de guidage (3) étant formés d'un seul tenant avec le capot (4), les éléments de guidage (3) s'étendant depuis le capot (4) radialement en direction de l'arbre de rotor (13), **caractérisé en ce que** les éléments de guidage (3) présentent un rayon de courbure augmentant au fur et à mesure que l'extension augmente dans le sens opposé à la direction de rotation de l'hélice de ventilateur (5).

2. Moteur électrique selon la revendication 1, **caractérisé en ce que** les éléments de guidage (3) comportent une arête d'entrée (31) radiale et une arête de sortie (30) axiale.

3. Moteur électrique selon la revendication 1 ou 2, **caractérisé en ce que** le capot (4) comporte un appendice (21) destiné à former un canal vers des éléments du système de dissipation de chaleur (7) d'un boîtier électronique (8).

4. Moteur électrique selon l'une des revendications 1 à 3, **caractérisé en ce que** l'espace (17) renferme totalement radialement l'hélice de ventilateur (5).

5. Moteur électrique selon l'une des revendications 1 à 4, **caractérisé en ce qu'**un canal annulaire (19) est formé entre une surface intérieure de paroi du capot (4) et une surface extérieure de paroi d'un boîtier du moteur électrique (1).

6. Moteur électrique selon l'une des revendications 1 à 5, **caractérisé en ce que** le capot (4) comporte un passage arrondi (22) depuis une grille d'aspiration (6) vers une partie cylindrique (25).

7. Moteur électrique selon l'une des revendications 1 à 6, **caractérisé en ce que** l'hélice de ventilateur (5) comporte des aubes (23) incurvées vers l'arrière dans la direction de rotation.

8. Moteur électrique selon la revendication 7, **caractérisé en ce que** toutes les aubes (23) de l'hélice de ventilateur (5) présentent la même courbure.

9. Moteur électrique selon l'une des revendications 1 à 8, **caractérisé en ce qu'**un disque de support (26) de l'hélice de ventilateur (5) présente la forme d'un pavillon de trompette, le disque de support (26) s'effilant en direction d'une ouverture (24).

10. Moteur électrique selon la revendication 9, **caractérisé en ce que** les aubes (23) de l'hélice de ventilateur (5) commencent à l'extérieur du centre du disque de support (26) sur un anneau de la forme de pavillon.

11. Moteur électrique selon la revendication 10, **caractérisé en ce que** les aubes (23) comportent un arrondi (27) sur le disque de support (26) sur leur point de départ.

12. Moteur électrique selon l'une des revendications 7 à 11, **caractérisé en ce que** les aubes (23) de l'hélice de ventilateur (5) sont disposées à l'oblique dans la direction périphérique, l'angle de la position oblique par rapport à l'arbre de rotor (12) étant de préférence supérieur à 5°, en particulier supérieur à 10°, de manière préférée supérieur à 15°, et/ou de préférence inférieur à 45°, en particulier inférieur à 40°, de manière préférée inférieur à 35°.
